# EUROPEAN PATENT APPLICATION

(11) **EP 0 819 553 A2**
(43) Date of publication of application: **21.01.1998**
(21) Application number: 97305278.0
(22) Date of filing: 15.07.1997
(51) Int. Cl.: B60C 9/04, B60C 15/00, B60C 9/02

(54) **Pneumatic tyre**

(30) Priority: 17.07.1996 JP 187659/96
(71) Applicant: SUMITOMO RUBBER INDUSTRIES, LTD., Hyogo-ken (JP)
(72) Inventor: Endo, Yukio, Shirakawa-shi, Fukushima-ken (JP)
(74) Representative: Stewart, Charles Geoffrey

(57) **Abstract**

A pneumatic tyre comprises a carcass (6) comprising at least two plies of cords (6A,6B), each ply extending between bead portions and turned up in the bead portions to form a pair of turnup portions and a main portion therebetween, the plies being substantially the same ply width, and the centres thereof in the widthwise direction being off set relatively to each other so that the turnup portions in each said bead portion have ends (9A,10A) positioned at different heights.

## Description

The present invention relates to a pneumatic tyre having an improved carcass structure being capable of improving production efficiency and costs.

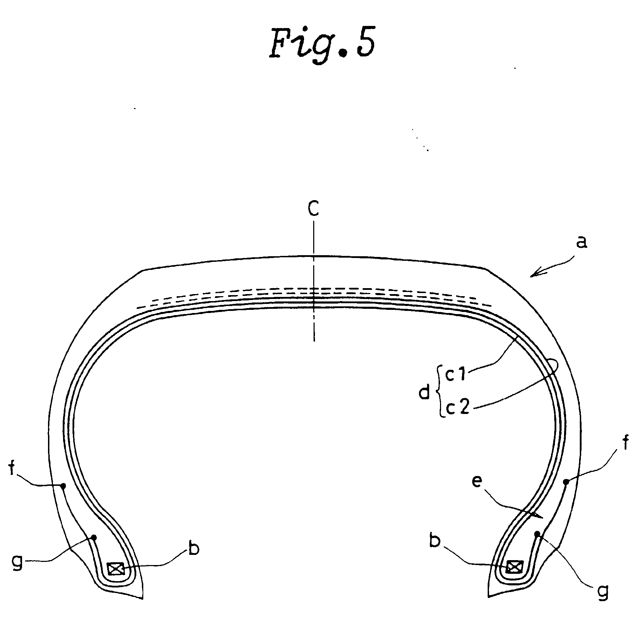

In the prior art pneumatic tyres provided with two or more plies (c1, c2) as shown in Fig.5, the carcass plies are usually formed of two or more strips of rubberised cord fabric having different widths in order for the carcass turnup ends (g, f) to be located at different radial heights and thereby avoid stress concentration thereon.

Thus for production it is necessary to prepare or stock a number of strips beforehand. Additionally, it is necessary for the tyre building machine to have a number of devices for supplying the strips because their widths are different.

Thus, as the number of carcass plies increase, the production efficiency lowers and the production costs increase.

It is therefor an object of the present invention to provide a pneumatic tyre in which the number of strips can be decreased and thereby the production efficiency and costs can be improved.

According to one aspect of the present invention, a pneumatic tyre comprises a carcass comprising two plies of cords, each ply extending between bead portions and turned up in the bead portions to form a pair of turnup portions and a main portion therebetween, the plies being substantially the same ply width, and the centres of the plies in the widthwise direction being off set relatively to each other so that the ends of the turnup portions in each bead portion are positioned at different heights.

Preferably, the carcass plies have the same cord angle, and a height difference between the turn up ends at each side of the tyre in the range of from 2 to 60 % of the tyre section height. The centres of the plies are thus off set relatively to the tyre equator in opposite axial directions and preferably by the same distance.

Embodiments of the present invention will now be described by way of example, in conjunction with the accompanying drawings, in which:
Fig.1 is a cross sectional view of a pneumatic tyre showing an embodiment of the present invention;
Figs.2 and 3 are diagrams for explaining a method of making the tyre according to the invention;
Fig.4 is a schematic cross sectional view of another example of the carcass plies; and
Fig.5 is a cross sectional view of a conventional tyre.

In the Figures, a pneumatic tyre according to the invention comprises a tread portion 2, a pair of axially spaced bead portions 4 each with a bead core 5 disposed therein, a pair of sidewall portions 3, a carcass 6 extending between the bead portions 4, and a belt 7 disposed radially outside the carcass 6 and inside a rubber tread.

The tyre in the embodiment is a radial tyre for a Recreation Vehicle or RV such as light truck, 4WD-car and the like.

The belt 7 in this example is composed of two crossed plies of steel cords.

The carcass 6 comprises an inner ply 6A and an outer ply 6B at least. Each of the plies 6A and 6B extends between the bead portions 4 through the sidewall portions 3 and the tread portion 2 and is turned up around each bead core 5 from the axially inside to the outside of the tyre to form a pair of turnup portions 6b and a main portion 6a therebetween. Each ply is composed of cords arranged radially at an angle of from 90 to 75 degrees, in this embodiment substantially 90 degrees with respect to the tyre equator C.

For the carcass cords, organic fibre cords, e.g. polyester, nylon, rayon and the like are preferably used. However, it is also possible to use steel cords. Preferably, all the plies are cut at the same cord angle.

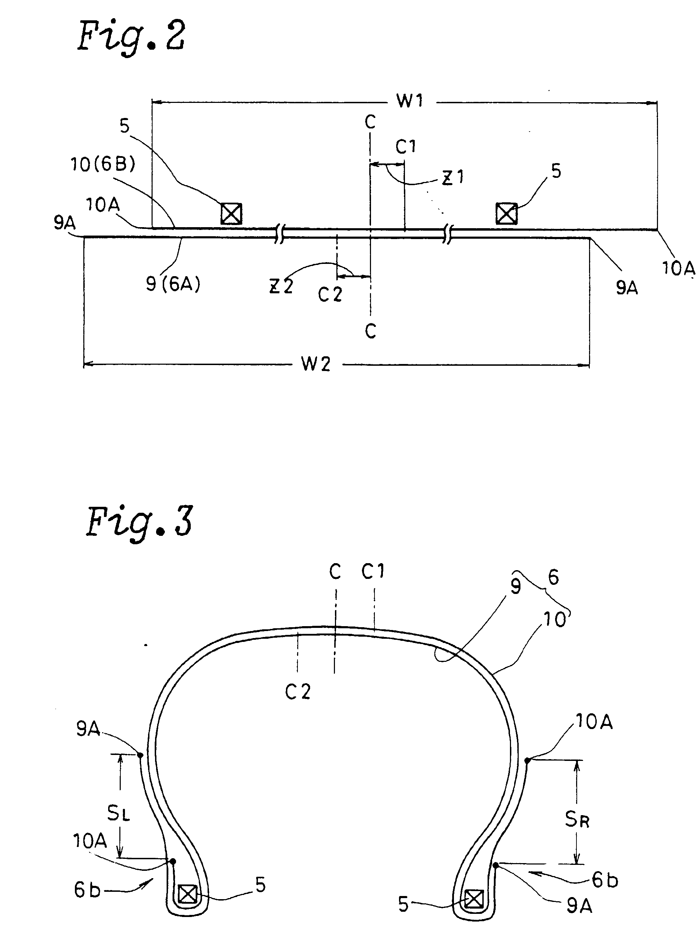

The carcass plies 6A and 6B have the same ply width W1, W2. Here, the ply width W1, W2 is the width measured in the widthwise direction of the ply. As shown in Fig.2, the ply width W1, W2 corresponds to the width of the strip 9, 10 of rubberised cord fabric used as the raw material for the carcass plies.

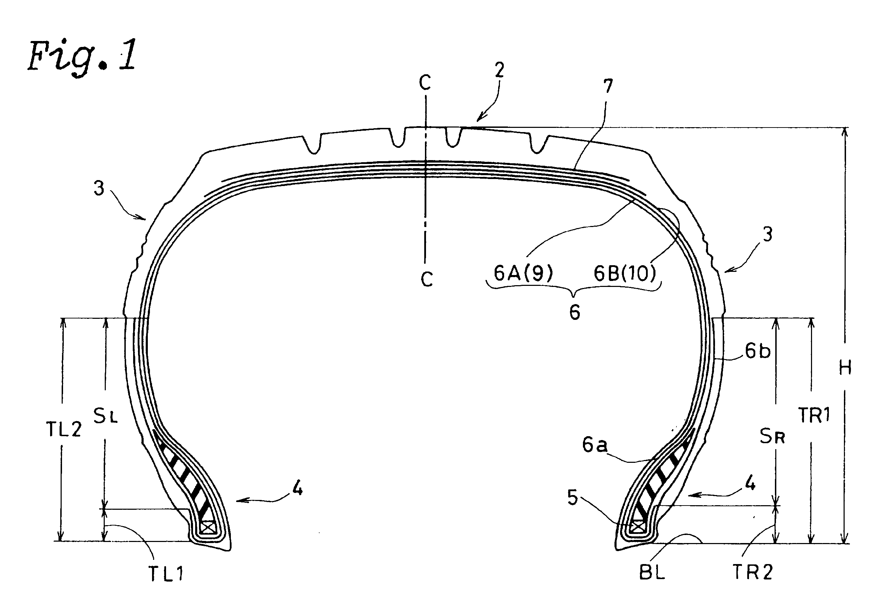

In the embodiment shown in Figs.1-3, in one of the bead portions (on the right side in this example), the turnup end 10A of the outer ply 10 is higher than the turnup end 9A of the inner ply 9. However, in the other bead portion (on the left side in this example), the turnup end 9A of the inner ply 9 is higher than the turnup end 10A of the outer ply 10. Thus with respect to the construction of the turnup structures in the bead portions, the carcass is not symmetrical.

The radial distances S (SR, SL) between the turnup ends 9A and 10A in each bead portion is preferably in the range of 2% to 60 % of the tyre section height H and not less than 5 mm. The radial distance S is measured under a standard condition in which the tyre is mounted on a standard rim and inflated to standard inner pressure. If the distance S is less than 5 mm or 2 % of the tyre section height H, stress in use is liable to be concentrated on the turnup ends.

Figs.2 and 3 show a method of manufacturing the tyre, wherein two rubberised cord strips 9 and 10 for the inner and outer plies 6A and 6B, respectively, are applied on a tyre building drum in a cylindrical form. All the strips are the same width, and the centres C1 and C2 of the strips in the widthwise direction are off set with respect to the tyre equator C, one towards the left and the right. The offset distances Z1 and Z2 are the same. Accordingly, the ends 9A and 10A of the strips 9 and 10 are spaced from each other by the distance (Z1+Z2). Next, the bead cores 5 are placed on the carcass plies (9 and 10), and the carcass is next shaped into a toroidal form from its cylindrical form. Then, belt plies 7, tread rubber and the like are applied to form a finished raw tyre. The raw tyre is then vulcanised in a mould. Incidentally, in Fig.2, the strip 9 (inner ply 6A) shifts left and the strip 10 (outer ply 6B) shifts right. However, these strips be reversed.

Therefore, although equi-width strips are used, the heights of the carcass ply turnup portions in each bead portion are changed, and stress concentration on the turnup ends can be prevented.

Additionally, it is not necessary to provide a plurality sets of strip supplying mechanisms corresponding to the number of the different width strips. Thus, the production efficiency and costs can be greatly improved.

In the embodiment shown in Figs.1-3, the carcass 6 is composed of two carcass plies 6A and 6B. However, the carcass can be composed of three or more plies.

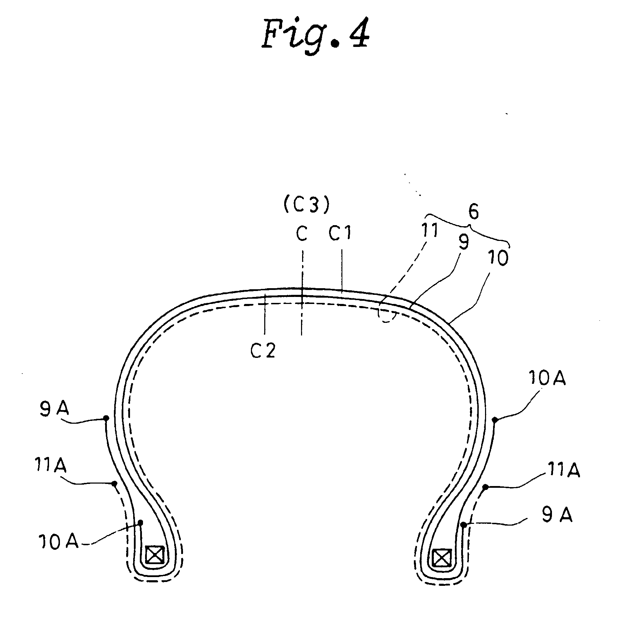

In Fig.4 showing another embodiment of the present invention, the carcass 6 is composed of three carcass plies which are equi-width rubberised cord strips 9, 10 and 11. Strip 11 is for the inner carcass ply, strip 9 is for the mid carcass ply and strip 10 is for the outer carcass ply. Strip 9 is shifted left and strip 10 is shifted right for example in the same way as above, but the remaining strip 11 is not displaced so that the centre C3 thereof is disposed on the tyre equator C. Accordingly, three turnup heights are provided although only equi-width strips 9, 10 and 11 are used.

In this embodiment, it is possible to set the centre C3 of strip 11 off the tyre equator C. Further, it is also possible to dispose strip 11 between the strips 9 and 10 or radially outside the strips 9 and 10.

In the present invention, furthermore, it is possible to combine two or more equi-width strips with one or more different-width strips. Still furthermore, it is possible to dispose two pairs of symmetrically shifted strips.

The present invention can be applied to a bias tyre in which the number of the carcass plies is relatively large.

### Comparison Tests

Test tyres (275/70R16 radial tyres) having the same structure except for the carcass structures were made and tested for durability of the carcass turnup portions as follows.

Using a tyre drum tester, the test tyres were mounted on a standard rim (8" rim) and inflated to standard inner pressure and then were run for 30000 km at a speed of 60 km/h under a tyre load of 1204 kgf. Then the tyres were cut open for inspection.

The specifications of the tyres and the test results are shown in Table 1.

From the test results, it was confirmed that no damage was found in the example tyres and thus the durability of the example tyres was maintained in the same level as the conventional tyre. However, the reference tyre with the turnup ends located at the same height suffered a turnup end looseness.

Further, it was also confirmed that the tyre uniformity and running performance of the tyre according to the invention were maintained at the same level as the conventional tyre.

As described above, in the present invention, the carcass plies or strips having the same width are shifted. Therefore, the heights of the carcass ply turnup ends can be changed in each bead portions to prevent the stress concentration thereon. The number of carcass ply stocks and the number of the strip suppliers of the tyre building machine are decreased. Therefore, the production efficiency and costs are improved.

**Table 1**

| Tyre | Ex.1 | Ex.2 | Ref. | Conv. |
|---|---|---|---|---|
| Structure | Fig.1 | Fig.1 | *2 | Fig.5 |
| Belt | 2 plies | | | |
| Cord | steel | | | |
| Cord angle &*1 | 24 degrees | | | |
| Ply width | | | | |
| Inner ply | 208 mm | | | |
| Outer ply | 198 mm | | | |
| Carcass | 2 plies | | | |
| Cord | polyester, 1500d/2 | | | |
| Cord angle *1 | 90 degrees | | | |

| Outer ply | | | | |
|---|---|---|---|---|
| W1 (mm) | 700 | 785 | 790 | 790 |
| Z1 (mm) | 90 right | 2.5 left | 0 | 0 |
| TR1 (mm) | 90 | 110 | 110 | 110 |
| TL1 (mm) | 20 | 105 | 110 | 110 |

| Inner ply | | | | |
|---|---|---|---|---|
| W2 (mm) | 700 | 785 | 790 | 610 |
| Z2 (mm) | 90 left | 2.5 left | 0 | 0 |
| TR2 (mm) | 20 | 105 | 110 | 20 |
| TL2 (mm) | 90 | 110 | 110 | 20 |
| Z1+Z2 (mm) | 180 | 5 | 0 | 0 |
| SR (mm) | 90 | 5 | 0 | 90 |
| SL (mm) | 90 | 5 | 0 | 90 |
| H (mm) | 159 | 159 | 159 | 159 |
| SL/H | 0.56 | 0.03 | 0 | 0.56 |
| Durability | no damage | no damage | loose | no damage |
| No. of strip | 1 | 1 | 1 | 2 |
| No of Strip-supplier | 1 | 1 | 1 | 2 |

| | | | | |
|---|---|---|---|---|
| *1) To the circumferential direction of the tyre. | | | | |
| *2) The plies were the same ply width and centred on the tyre equator. | | | | |

## Claims

1. A pneumatic tyre comprising a carcass comprising at least two plies (6A,6B) of cords, each ply extending between bead portions (4) and turned up in the bead portions (4) to form a pair of turnup portions and a main portion therebetween, characterised in that the said two plies are substantially of same ply width, and the centres thereof in the widthwise direction are off set relatively to each other so that the turnup portions in each said bead portion have ends (9A,10A) positioned at different heights.

2. A pneumatic tyre according to claim 1, characterised in that said two plies (9,10) have their cords set at the same angle, and the ends (9A,10A) of the turnup portions in each bead portion are positioned so that the turn up heights have a difference (SR) in the range of from 2 to 60 % of the tyre section height (H).

3. A pneumatic tyre according to claim 1 or 2, characterised in that the two plies have their centre lines off set from the tyre equator towards either side of the centre line by the same distance.
